# EUROPEAN PATENT SPECIFICATION

(11) **EP 1 512 849 B1**
(45) Date of publication and mention of the grant of the patent: **31.10.2007**
(21) Application number: 04021165.8
(22) Date of filing: 06.09.2004
(51) Int. Cl.: F01N 3/08, F01N 3/20, F01N 3/025, F01N 3/035, F01N 9/00

(54) **Exhaust purifying apparatus and method for purifying exhaust**
Abgasreinigungsanlage und Vefahren zur Abgasreinigung
Dispositif et procédé d'épuration de gaz d'échappement

(30) Priority: 08.09.2003 JP 2003315802
(43) Date of publication of application: 09.03.2005
(73) Proprietor: Toyota Jidosha Kabushiki Kaisha, Toyota-shi, Aichi-ken, 471-8571 (JP); Denso Corporation, Kariya-shi, Aichi-ken, 448-8661 (JP)
(72) Inventor: Otsubo, Yasuhiko, Toyota-shi, Aichi-ken 471-8571 (JP); Inaba, Takayoshi, Kariya-shi, Aichi-ken 448-8661 (JP)
(74) Representative: Kuhnen & Wacker

(56) References cited:
- EP-A- 0 383 187
- EP-A- 1 382 812
- US-A1- 2003 097 833
- US-A1- 2003 145 582
- PATENT ABSTRACTS OF JAPAN vol. 010, no. 062 (M-460), 12 March 1986 (1986-03-12) & JP 60 206923 A (MITSUBISHI JIDOSHA KOGYO KK), 18 October 1985 (1985-10-18)

## Description

### BACKGROUND OF THE INVENTION

The present invention relates to an exhaust purifying apparatus, which purifies an exhaust gas exhausted from an engine with an exhaust purifying catalyst. The present invention also pertains to a method for purifying exhaust.

As an exhaust purifying apparatus of a diesel engine, an apparatus that collects particulate matter (PM), included in an exhaust gas, with an exhaust purifying catalyst located in an exhaust passage is known. As one form of this exhaust purifying apparatus, for example, Japanese Laid-Open Patent Publication No. 2002-106329 discloses a controlling technology which burns particulate matter to remove them when the particulate matter accumulate more than a predetermined amount on an exhaust purifying catalyst, and regenerates the exhaust purifying catalyst.

This technology involves providing a fuel adding valve in an exhaust passage separately from a fuel injection valve for engine drive, and adding fuel from the fuel adding valve into a section upstream of the exhaust purifying catalyst in the exhaust passage when all the predetermined regeneration requirements are satisfied. According to this technology, the added fuel burns in the exhaust purifying catalyst to generate heat, and the temperature (catalyst temperature) of the exhaust purifying catalyst rises to a temperature that permits the particulate matter to be removed (particulate-removal temperature: about 600°C), and particulate matter is burned.

In the above-mentioned Japanese Laid-Open Patent Publication No. 2002-106329, when the catalyst temperature exceeds particle ignition temperature, which is higher than the particulate-removable temperature, the fuel addition from the fuel adding valve is suspended. This is to prevent the catalyst temperature from rising rapidly as the particulate matter catches flame and burns immediately (excessive temperature rising), thereby preventing the temperature of the catalyst from becoming higher than an upper limit (upper limit temperature) in a temperature zone in which the exhaust purifying catalyst has an exhaust gas purification capability.

In a diesel engine, combustion is achieved under excessive air, and hence, an exhaust gas includes a lot of excess air. This air in the exhaust gas removes the heat of the exhaust purifying catalyst in the process of passing through the exhaust purifying catalyst, and functions to suppress the rise of the catalyst temperature. The amount of heat removed by this air differs depending on the intake air amount into a diesel engine. Although the amount of heat removed by air is large when intake air amount is large such as during heavy loading and high-speed operation, the amount of heat removed by air is small when the intake air amount is small such as during idling. For this reason, it is possible to prevent the catalyst temperature from becoming higher than the above-mentioned upper limit temperature even if fuel is added since the amount of heat removed by air is large even when the catalyst temperature is originally high such as during heavy loading, high-speed operation, etc.

Nevertheless, the catalyst temperature may become higher than the above-mentioned upper limit temperature by adding fuel since the amount of heat removed by air is small immediately after the diesel engine starts (restarts) with the catalyst temperature high. This inconvenience may arise similarly to the above-described situation since it is determined whether fuel should be added only with the catalyst temperature, even when the fuel addition is suspended after the catalyst temperature exceeds the particulate ignition temperature as described in the above-mentioned Japanese Laid-Open Patent Publication No. 2002-106329.

US 2003/145582 A1 discloses an exhaust purifying apparatus, comprising a particulate filter that purifies exhaust gas exhausted from an engine; and regeneration control means that performs the regeneration control, the regeneration control means regenerates the filter by combusting and removing particular matter disposited on the filter, wherein when filter regeneration requirements are all satisfied, the control means performs the regeneration control, wherein the requirements include at least a requirement relative to a temperature of the filter and a requirement related to an amount of air that passes through the filter.

JP 60206923 A discloses a system where the particulates in the exhaust gas engine are caught by an oxidizer arranged in an exhaust path, a pressure responsive diaphragm is provided as an idle-up actuator to a fuel injection pump. Said diaphragm is functioned by the atmospheric pressure fed through a three-way changeover valve and an air filter into the pressure chamber or the vacuum pressure fed from a vacuum pump. Then a solenoid in the three-way changeover valve is controlled through an electric controller such that said diaphragm is brought into the idle-up condition upon exceeding of the temperature of the oxidizer to be detected through a temperature sensor over predetermined level.

### SUMMARY OF THE INVENTION

Accordingly, it is an objective of the present invention to provide an exhaust purifying apparatus which burns particulate matter in the exhaust gas deposited on the exhaust purifying catalyst thereby removing the particulate matter from the catalyst, and reliably prevents the exhaust gas purification function of the exhaust purifying catalyst from being spoiled by the excessive temperature rising caused by the removal of the particulate matter from the catalyst. The present invention also pertains to a method for purifying exhaust.

To achieve the above objective, the present invention provides an exhaust purifying apparatus according to claim 1. The apparatus includes an exhaust purifying catalyst that purifies exhaust gas exhausted from an engine and regeneration control means that performs regeneration control. The regeneration control means regenerates the catalyst by combusting and removing particulate matter deposited on the catalyst. When catalyst regeneration requirements are all satisfied, the control means performs the regeneration control. The requirements include at least a requirement related to a temperature of the catalyst and a requirement related to an amount of heat removed by air that passes through the catalyst.

According to the present invention, a method for purifying exhaust according to claim 7 is also provided. Exhaust gas exhausted from an engine is purified with an exhaust purifying catalyst. Control for regenerating the catalyst is performed by combusting and removing particulate matter deposited on the catalyst. Whether regeneration requirements are all satisfied is judged. The requirements include at least a requirement related to a temperature of the catalyst and a requirement related to an amount of heat removed by air that passes through the catalyst. The regeneration control is performed when all the regeneration requirements are satisfied.

Other aspects and advantages of the invention will become apparent from the following description, taken in conjunction with the accompanying drawings, illustrating by way of example the principles of the invention.

### BRIEF DESCRIPTION OF THE DRAWINGS

The invention, together with objects and advantages thereof, may best be understood by reference to the following description of the presently preferred embodiments together with the accompanying drawings in which:
FIG. 1 is a schematic diagram showing the structure of an exhaust purifying apparatus according to one embodiment of the present invention;
FIG. 2(a) is a schematic diagram showing the positional relationship between first and second catalytic converters in an exhaust passage of the apparatus in FIG. 1;
FIGS. 2(b) and 2(c) are characteristic graphs showing temperature characteristics of the exhaust passage shown in FIG. 2(a);
FIG. 3 is a flowchart showing a catalyst regeneration control routine executed by an electronic controller; and
FIG. 4 is a flowchart showing an embodiment of the catalyst regeneration control routine according to the invention.

### DETAILED DESCRIPTION OF THE PREFERRED EMBODIMENTS

Hereafter, an embodiment will be described.

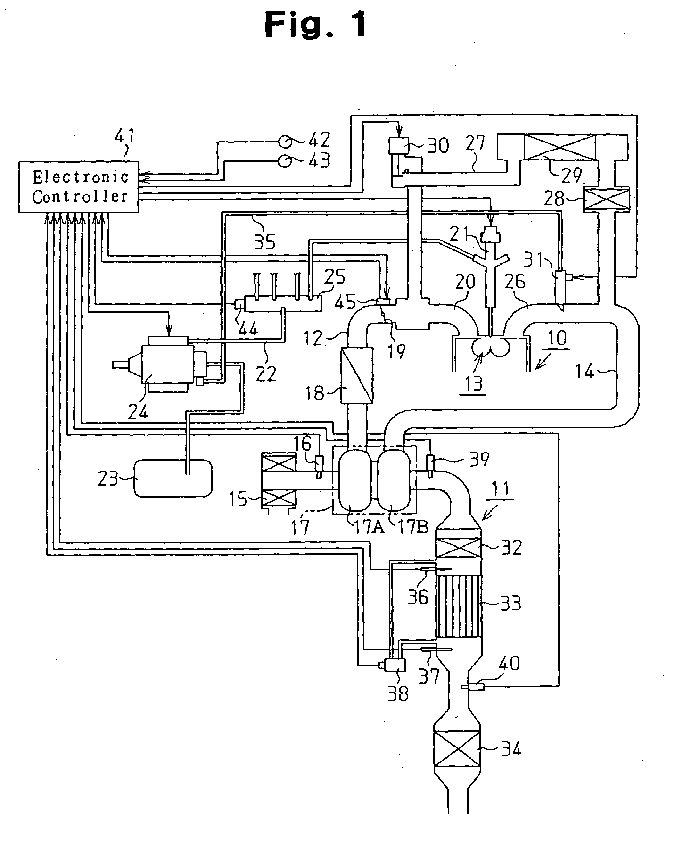

FIG. 1 shows the structure of a diesel engine (hereafter, simply referred to as an engine) 10 and its exhaust purifying apparatus 11 according to this embodiment. The engine 10 roughly comprises an intake passage 12, combustion chambers 13, and an exhaust passage 14. An air cleaner 15, which purifies intake air in this intake passage 12, is provided in a most upstream section of the intake passage 12. In the engine 10, an air flowmeter 16, which detects a flow rate of air in the intake passage 12, a compressor 17A of a turbocharger 17, an intercooler 18, and an intake throttle valve 19 are arranged in order from the air cleaner 15 towards an intake air downstream. The intake passage 12 is branched in an intake manifold 20 provided in the intake downstream of the intake throttle valve 19, and is connected to the combustion chamber 13 of each cylinder of the engine 10 through this branch connection.

A fuel injection valve 21 is provided in the combustion chamber 13 of each cylinder. Each fuel injection valve 21 injects fuel for combustion in the corresponding combustion chamber 13. Fuel is supplied to each fuel injection valve 21 from a fuel tank 23 through a fuel supply passage 22. In the fuel supply passage 22, a fuel feed pump 24 which draws the fuel from a fuel tank 23 and pressurizes/discharges the fuel, and a common rail 25 which is a high-pressure fuel pipe which accumulates the discharged high-pressure fuel are provided. The fuel injection valve 21 of each cylinder is connected to the common rail 25.

On the other hand, an exhaust manifold 26 for gathering exhaust gas discharged from each cylinder, and the turbine 17B of the turbocharger 17 are provided in the exhaust passage 14.

An exhaust gas recirculation (hereafter, referred to as EGR) system, which recirculates part of the exhaust gas during air intake, is adopted in the engine 10. The EGR system is equipped with an EGR passage 27, which makes the intake passage 12, and exhaust passage 14 communicate. A section upstream of the EGR passage 27 is connected between the exhaust manifold 26 of the exhaust passage 14, and the turbine 17B. An EGR cooler catalyst 28 which purifies the exhaust gas which is recirculated, an EGR cooler 29 which cools recirculated exhaust gas, and an EGR valve 30 which adjusts a flow rate of recirculated exhaust gas are arranged in order from the upstream side in the EGR passage 27. A section downstream of the EGR passage 27 is connected between the intake throttle valve 19 of the intake passage 12, and the intake manifold 20.

In such an engine 10, after the intake air in the intake passage 12 is purified by the air cleaner 15, it is introduced into the compressor 17A of the turbocharger 17. In the compressor 17A, the introduced air is compressed and discharged into the intercooler 18. After the air, which becomes hot by the compression is cooled by the intercooler 18, it is distributed and supplied through the intake throttle valve 19 and intake manifold 20 to the combustion chamber 13 of each cylinder. The flow rate of the air in such an intake passage 12 is adjusted through the opening control of the intake throttle valve 19. The flow rate of the air, that is, the amount of an intake air is detected by an air flowmeter 16.

In the combustion chamber 13 where the air is introduced, fuel is injected from the fuel injection valve 21 in a compression stroke of each cylinder. An air-fuel mixture consisting of the air introduced through the intake passage 12, and the fuel injected from the fuel injection valve 21 is burnt in the combustion chamber 13.

The exhaust gas generated in combustion in the combustion chamber 13 of each cylinder is introduced into the turbine 17B of the turbocharger 17 through the exhaust manifold 26. When the turbine 17B is driven by a force of this introduced exhaust gas, the compressor 17A provided in the intake passage 12 is driven to compress the above-mentioned air.

On the other hand, part of the exhaust gas generated in the above-mentioned combustion is introduced into the EGR passage 27. The exhaust gas introduced into the EGR passage 27 is purified by the EGR cooler catalyst 28, and after being cooled by the EGR cooler 29, it is recirculated into the air downstream of the intake throttle valve 19 in the intake passage 12. The flow rate of the exhaust gas which is recirculated in this way is performed is adjusted through the opening control of the EGR valve 30.

The engine 10 is constituted as mentioned above. Next, an exhaust purifying apparatus 11 for purifying an exhaust gas exhausted from this engine 10 will be described. The exhaust purifying apparatus 11 is equipped with a fuel adding valve 31, as well as three catalytic converters (a first catalytic converter 32, a second catalytic converter 33, and a third catalytic converter 34) as an exhaust purifying catalyst.

The first catalytic converter 32 is located downstream of the turbine 17B. The first catalytic converter 32 bears an occlusion reduction type NOx catalyst, and not only occludes nitrogen oxide (NOx) in the exhaust gas, but also reduces and purifies the occluded nitrogen oxide (NOx) by the supply of an unburned fuel component used as a reducing agent. The second catalytic converter 33 is located downstream of the first catalytic converter 32. The second catalytic converter 33 is formed of a porous material which allows gas components to pass in the exhaust gas, and prevents particulate matter PM in this exhaust gas from passing, and bears the occlusion reduction type NOx catalyst. The third catalytic converter 34 is located downstream of the second catalytic converter 33. The third catalytic converter 34 bears an oxidation catalyst, which purifies the exhaust gas through the oxidation of hydrocarbon (HC) and carbon monoxide (CO) in the exhaust gas.

The fuel adding valve 31 is arranged in an exhaust gas aggregation section of the exhaust manifold 26. The fuel adding valve 31 is connected to the above-mentioned fuel feed pump 24 through the fuel passage 35, and injects and adds fuel supplied from this fuel feed pump 24 to the exhaust gas as a reducing agent. The added fuel temporarily makes the exhaust gas a reducing atmosphere to reduce and purify the nitrogen oxide (NOx) which is occluded in the first catalytic converter 32 and second catalytic converter 33. The second catalytic converter 33 concurrently purifies the particulate matter PM.

In a space between the first catalytic converter 32 and second catalytic converter 33 in the exhaust passage 14, an exhaust temperature sensor 36 is arranged. The sensor 36 detects the temperature of the exhaust gas, which passes through this space. That is, the sensor 36 detects the temperature of the exhaust gas before flowing into the second catalytic converter 33 (hereafter, this is referred to as input exhaust gas temperature). In a space downstream of the second catalytic converter 33 in the exhaust passage 14, an exhaust temperature sensor 37 is arranged. The exhaust temperature sensor 37 detects the temperature of the exhaust gas which passes through this space, that is, the temperature of the exhaust gas immediately after passing through the second catalytic converter 33 (hereafter, this is referred to as output exhaust gas temperature).

A differential pressure sensor 38 is arranged in the exhaust passage 14. The differential pressure sensor 38 detects the pressure difference between a section upstream of the second catalytic converter 33 and a section downstream of the second catalytic converter 33. The pressure difference detected by the differential pressure sensor 38 is used to detect clogging inside the second catalytic converter 33. Oxygen sensors 39 and 40 which detect the oxygen concentrations in the exhaust gas are located upstream of the first catalytic converter 32 of the exhaust passage 14 and between the second catalytic converter 33 and third catalytic converter 34, respectively.

An electronic controller 41 controls the engine 10 and the exhaust purifying apparatus 11 which are explained above. The electronic controller 41 includes a CPU which executes various types of processing related to the control of the engine 10, a ROM which stores a program and data necessary for the control, a RAM which stores the processing result of the CPU, a backup RAM which stores and holds various data also after electric power supply is stopped, and input and output ports for exchanging information with the external.

Besides the respective sensors 16, 36 to 40 mentioned above, an NE sensor 42 which detects engine speed, an accelerator sensor 43 which detects an accelerator manipulation amount, a common rail sensor 44 which detects the internal pressure of the common rail 25, a throttle valve sensor 45 which detects the opening degree of the intake throttle valve 19, and the like are connected to the input ports of the electronic controller 41. The above-mentioned intake throttle valve 19, fuel injection valve 21, fuel feed pump 24, fuel adding valve 31, and the EGR valve 30 are connected to the output ports of the electronic controller 41. Then, the electronic controller 41 performs various types of operation control of the engines 10 including the control, which relates to the purification of the exhaust gas by controlling equipment connected to these output ports on the basis of the detection results of above-mentioned respective sensors 16, 36 to 40, and 42 to 45.

The electronic controller 41 executes control of the catalytic converters as one of controls, which relate to the purification of the exhaust gas. Four catalyst control modes, that is, a catalyst regeneration control mode, a sulfur poisoning (hereafter, this is called as S poisoning) elimination control mode, a NOx reduction control mode, and a normal control mode are set in this catalyst control. The electronic controller 41 selects and executes a catalyst control mode according to the state of the catalytic converters 32 to 34.

The catalyst regeneration control mode is a mode of burning the particulate matter PM deposited in the second catalytic converter 33 to exhaust them as carbon dioxide (CO₂) and water (H₂O). The catalyst regeneration control mode is a mode of repeating continuously fuel addition from the fuel adding valve 31 to raise the catalyst temperature (catalyst bed temperature), for example to 600°C to 700°C. The catalyst regeneration control mode is selected and executed when at least the following two requirements (i) and (ii) are satisfied.

Requirement (i): A catalyst regeneration request flag F is ON. The catalyst regeneration request flag F is set at OFF in an initial state, and when the amount of deposition of the particulate matter PM in the second catalytic converter 33 becomes no less than a predetermined value α, it is switched to ON. The catalyst regeneration request flag F is returned at OFF when the amount of deposition of the particulate matter PM is set at 0 by the catalyst regeneration control. The state (OFF or ON) of the catalyst regeneration request flag F is stored in the backup RAM. Accordingly, once the amount of deposition of the particulate matter PM is equal to or exceeds a predetermined value α, and the catalyst regeneration request flag F is switched from OFF to ON, the state is maintained even after the engine 10 is stopped, unless the amount of deposition of the particulate matter PM becomes 0.

Requirement (ii): The second catalytic converter 33 is heated at some extent, and the following catalyst regeneration temperature requirements are satisfied. These are requirements necessary for raising the catalyst temperature. Specifically, the catalyst temperature is no less than a constant value (200°C), and the input exhaust temperature is under a reference value (650°C), and, the output exhaust temperature is within a predetermined temperature range.

By the way, the temperature zone in which the second catalytic converter 33 exhibits an exhaust gas purification function exists. The second catalytic converter 33 becomes impossible to perform exhaust gas purification, which is an objective, at a temperature atmosphere higher than the upper limit (about 800°C, and this is hereafter referred to an upper limit temperature) of the temperature zone. Therefore, it is required that the catalyst regeneration control is performed lest the catalyst temperature of the second catalytic converter 33 should become higher than the upper limit temperature.

On the other hand, in the engine 10, air included in the exhaust gas exhibits a function of suppressing the rise of the catalyst temperature by removing the heat of the second catalytic converter 33 in the process of passing through the second catalytic converter 33. Accordingly, it is possible to satisfy the above-mentioned request (to prevent the catalyst temperature from becoming higher than the upper limit temperature) by harmonizing a equalizing the heating value of the second catalytic converter 33 and the amount of heat removed by air by adequately using this function of air removing heat.

Nevertheless, the amount of heat removed by air differs according to the intake air amount into the engine 10. Although the amount of heat removed by air is much when intake air amount is much as in the cases of heavy loading and high-speed rotation, the amount of heat removed by air is little when the intake air amount is little like the case of idling.

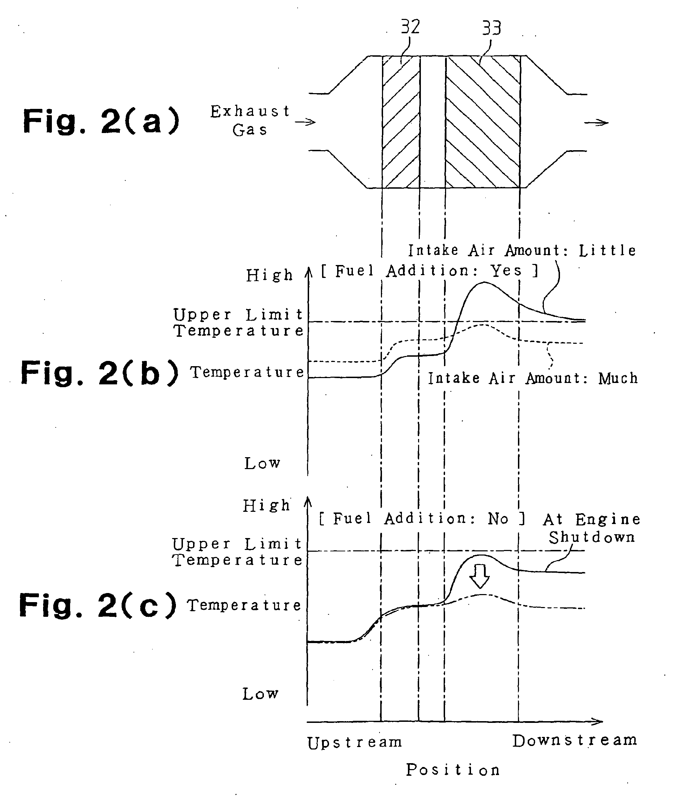

FIG. 2(a) shows the positional relationship between the first catalytic converter 32 and second catalytic converter 33 in the exhaust passage 14. FIG. 2(b) shows the temperature of each part in the exhaust passage 14 when fuel is added from the fuel adding valve 31. A dotted line in FIG. 2(b) shows the case that the intake air amount is much as in the cases of high-speed rotation and heavy loading, and a continuous line shows the case that the intake air amount is little as in the case of idling. FIG. 2(c) shows the temperature of each part in the exhaust passage 14 when fuel is not added. A continuous line in FIG. 2(c) shows the case that the engine 10 is stopped.

The relationship between the amount of heat removed by air and the temperature of each part in the exhaust passage 14 will be explained by using FIGS. 2(a) to 2(c). When the catalyst temperature is high originally like the cases of heavy loading and high-speed rotation, the amount of heat removed by air is much. Hence, as shown by a dotted line in FIG. 2(b), it is possible to prevent the catalyst temperature of the second catalytic converter 33 from becoming higher than the upper limit temperature even if fuel is added from the fuel adding valve 31.

On the other hand, under the situation that is like the case in which the engine 10 is started to idle immediately after the stop of the engine 10, the catalyst temperature is high before the catalyst regeneration control is performed although it is not so high in the cases of heavy loading and high-speed rotation which are mentioned above, and the amount of heat removed is little, the catalyst temperature rise suppressing effect by air is little. In addition, in such a situation, the above-mentioned requirement (i) is satisfied since the catalyst regeneration request flag F is held at ON, and requirement (ii) is also satisfied since the catalyst temperature is high.

When fuel addition is performed since both of the requirements (i) and (ii) are satisfied, there is a possibility that the catalyst temperature of the second catalytic converter 33 becomes higher than the upper limit temperature as shown by the continuous line in FIG. 2(b), by the combustion of the added fuel and the combustion of the deposited particulate matter PM.

Hence, in this embodiment, the requirement (iii) about the amount of heat removed by air which passes through the second catalytic converter 33 is added to the above-mentioned requirements (i) and (ii). The above-mentioned catalyst regeneration control is performed with determining that the regeneration requirements are satisfied when all of such requirements (i) to (iii) are satisfied.

Requirement (iii): Total amount of air in the exhaust gas which passes through the second catalytic converter 33 after start up of the engine 10 is more than a predetermined value A.

A close relationship exists between the total amount of air in the exhaust gas, which passes through the second catalytic converter 33, and the amount of heat removed by air. The total amount of air in the exhaust gas which passes through the second catalytic converter 33 corresponds to the total amount of air drawn in the engine 10, that is, the total amount of air which passes through the inside of the intake passage 12 (total intake air amount). The heating value removed by air from the second catalytic converter 33 is little when the total intake air amount is little, and it increases with the increase of the total intake air amount.

From this, the total intake air amount after the start up of the engine 10 is used as a value that is equivalent to the amount of heat removed by air, that is, as a physical quantity representing the amount of heat removed. As the predetermined value A in the above-mentioned requirement (iii), a value is used, which value can prevent the catalyst temperature of the second catalytic converter 33 from exceeding the upper limit temperature after the fuel addition by the fuel adding valve 31 has been performed.

The S poisoning elimination control mode is a mode of emitting sulfur when the NOx occlusion reduction catalysts in the first catalytic converter 32 and the second catalytic converter 33 receive sulfur poisoning and drop the occlusion capacity of nitrogen oxide (NOx), and a mode of continuously repeating the fuel addition from the fuel adding valve 31, and increasing the catalyst bed temperature (for example, 600°C to 700°C).

The NOx reduction control mode is a mode of reducing the nitrogen oxide (NOx), which is occluded in the NOx occlusion reduction catalyst in the first catalytic converter 32 and the second catalytic converter 33, to nitrogen N₂, carbon dioxide (CO₂), and water (H₂O), and emitting them. In this mode, the catalyst temperature becomes comparatively low temperature (e.g., 250°C to 500°C) by the intermittent fuel addition in a comparatively long interval from the fuel adding valve 31. A state other than these catalyst regeneration control mode, S poisoning elimination control mode, and NOx reduction control mode becomes the normal control mode, and addition of reducing agent from the fuel adding valve 31 is not made in this normal control mode.

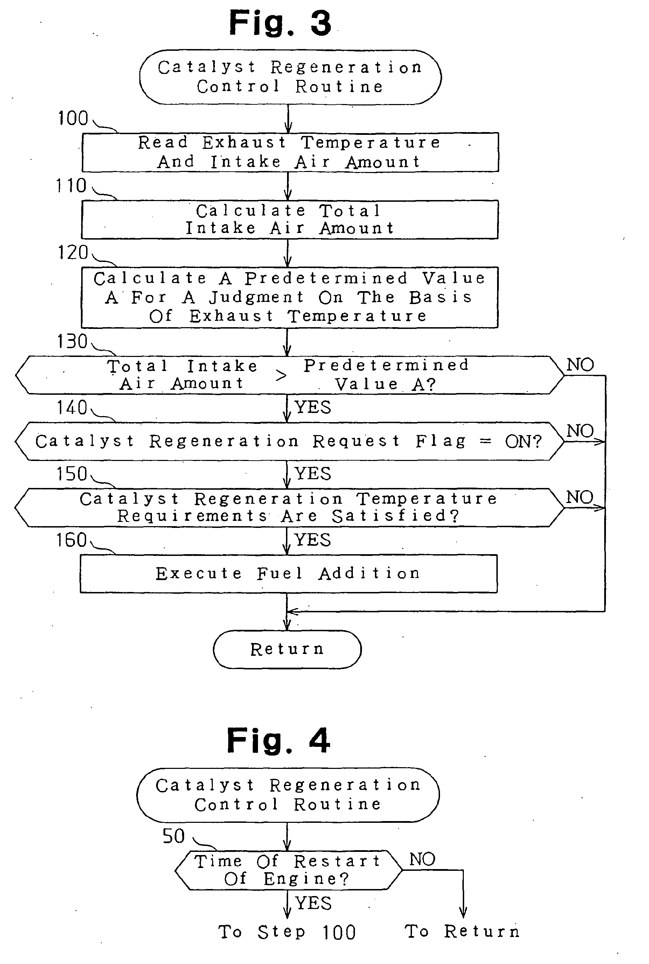

FIG. 3 shows the catalyst regeneration control routine performed by the electronic controller 41 on the basis of the regeneration requirements mentioned above. This catalyst regeneration control routine is started on condition that a starting switch (not shown) is made ON so as to start up the engine 10, and is repeatedly executed every predetermined timing, for example, every fixed time.

The electronic controller 41 first reads the input and output exhaust temperature by the exhaust temperature sensors 36 and 37, and the intake air amount by the air flowmeter 16 at step 100, respectively. Next, at step 110, the electronic controller 41 calculates the total amount (the total intake air amount) of intake air after the start up of the engine 10 on the basis of the intake air amount at the above-mentioned step 100. For example, the electronic controller 41 reads the total intake air amount (the total intake air amount up to the last control period), which was calculated in the last control period and was stored in the RAM, and adds to this the intake air amount at the above-mentioned step 100. This added result is stored in the RAM as the total intake air amount up to this control period.

Next, at step 120, the electronic controller 41 calculates the predetermined value A used for a comparison test with the total intake air amount on the basis of the input exhaust temperature and output exhaust temperature at the above-mentioned step 100 with reference to a map. The predetermined value A is the air volume which can prevent the catalyst temperature from exceeding the upper limit temperature after the catalyst temperature has rised by the combustion of added fuel, as mentioned above. The map used for the calculation of the predetermined value A specifies the relationship between the exhaust temperature and the predetermined value A which becomes large as the exhaust temperature becomes high.

Next, at step 130, the electronic controller 41 judges whether the requirement (iii) in the regeneration requirements is satisfied, that is, whether the total intake air amount at the above-mentioned step 110 is more than the predetermined value A at the above-mentioned step 120. When this determination requirement is not satisfied, the catalyst regeneration control routine is temporarily suspended. Accordingly, after the start up of the engine 10, the fuel addition from the fuel adding valve 31 is not performed until the total intake air amount exceeds the predetermined value A according to the exhaust temperature.

In a period after the start up of the engine 10 to the determination requirement at step 130 being satisfied, there is no heat generated by the combustion of added fuel, and the heat of the second catalytic converter 33 is removed by air in the exhaust gas passing through the second catalytic converter 33 though it is little. For this reason, as shown by an arrow in FIG. 2(c), the catalyst temperature of the second catalytic converter 33 drops according to the increase in the total intake air amount. Immediately before the determination requirement at step 130 is satisfied, as shown by a chain double-dashed line in FIG. 2(c), the exhaust temperature drops to the temperature at which the catalyst temperature does not exceed the upper limit temperature even if fuel is added from the fuel adding valve 31 and is burnt.

When the determination requirement at the above-mentioned step 130 is satisfied, the electronic controller 41 judges at step 140 whether the requirement (i) in the regeneration requirements is satisfied, that is, whether the amount of deposition of the particulate matter PM is no less than the predetermined value α and the catalyst regeneration request flag F is set at ON. When the determination requirement at step 140 is not satisfied, the catalyst regeneration control routine is temporarily suspended, and when satisfied, the process goes to step 150.

At step 150, the electronic controller 41 judges whether the requirement (ii) in the regeneration requirements is satisfied, that is, whether the catalyst regeneration temperature requirements are satisfied. When the determination requirement at step 150 is not satisfied, the catalyst regeneration control routine is temporarily suspended. When satisfied, that is, when the regeneration requirements are satisfied by all the three requirements (i) to (iii) being satisfied, the fuel addition from the fuel adding valve 31 is repeated continuously at step 160.

Since the catalyst temperature rises by the combustion of this added fuel, the combustion and removal of the particulate matter PM deposited on the second catalytic converter 33 are performed. At this time, the catalyst temperature is lowered by the heat removal by the air before fuel addition. For this reason, in the second catalytic converter 33, although the catalyst temperature rises, it is hard to exceed the upper limit temperature. After passing through the processing at step 160, the catalyst regeneration control routine is temporarily suspended.

Each processing in the catalyst regeneration control routine by the electronic controller 41 mentioned above is equivalent to catalyst regeneration control means.

This embodiment explained in full detail above obtains the following advantages.
(1) The requirement (iii) on the amount of heat removed by air, which passes through the second catalytic converter 33, is added to the regeneration requirements including the requirement on the catalyst temperature (catalyst regeneration temperature requirement (ii)). By determining on the basis of the regeneration requirements in consideration of the amount of heat removed by air in this way whether the catalyst regeneration control is performed, it is possible to prevent the catalyst temperature from exceeding the upper limit temperature in comparison with the case based only on the catalyst temperature.
   In consequence, while performing the combustion and removal of the particulate matter PM in the exhaust gas deposited on the second catalytic converter 33 by the catalyst regeneration control, it is readily possible to suppress the spoilage of the exhaust gas purification function of the second catalytic converter 33 due to an excessive temperature rise caused by the combustion and removal of the particulate matter PM from the second catalytic converter 33.
(2) The requirement (iii) on the amount of heat removed is related to whether the amount of heat removed by air or a physical quantity (equivalent value) representing the amount of heat removed is more than the predetermined value A, and catalyst temperature of the second catalytic converter 33 is lowered by prohibiting the catalyst regeneration control until the requirement (iii) is satisfied. For this reason, the regeneration requirements are satisfied when the above-mentioned requirements (i) to (iii) are satisfied by adequately setting of the predetermined value A, and hence, it is possible to readily prevent the catalyst temperature from becoming higher than the upper limit temperature even if the catalyst temperature rises by fuel addition.
(3) The accumulated value of the intake air amount (total intake air amount) drawn into the engine 10 after the start up of the engine 10 is made physical quantity (equivalent value) representing the amount of heat removed, and it is used for the judgment of whether the catalyst regeneration control should be performed. For this reason, although the amount of heat removed by air is little since the intake air amount which passes through the second catalytic converter 33 is little immediately after the restart of the engine 10, it is possible to prevent the catalyst temperature from becoming higher than the upper limit temperature of the second catalytic converter 33 by prohibiting the catalyst regeneration control on the basis on the comparison result of the above-mentioned total intake air amount and the predetermined value A.
(4) As the predetermined value A, a value (intake air amount) is used, which value can prevent the catalyst temperature of the second catalytic converter 33 from exceeding the upper limit temperature after the fuel addition by the fuel adding valve 31 has been performed. Hence, by stopping the fuel addition from the fuel adding valve 31 by prohibiting the catalyst regeneration control when the total intake air amount is no more than the predetermined value A, it is possible to prevent the catalyst temperature from exceeding the upper limit temperature by the heat removal by air even if the catalyst regeneration control is performed.

Accordingly, although the catalyst temperature of the second catalytic converter 33 rises since fuel is added by the catalyst regeneration control from the fuel adding valve 31 when the total intake air amount exceeds the predetermined value A, it is possible to prevent the catalyst temperature from becoming higher than the upper limit temperature.

The invention is embodied in the following forms.

When the catalyst temperature is high and the amount of heat removed is little since the amount of air, which passes through the second catalytic converter 33, is little, performing the catalyst regeneration control causes the catalyst temperature to exceed the upper limit temperature. Such a situation may happen mainly at the time of the restart of the engine 10. Therefore, it is also sufficient to perform the catalyst regeneration control only when all the regeneration requirements are satisfied at the time of the restart of the engine 10.

In this case, for example, as shown in FIG. 4, in the catalyst regeneration control routine (FIG. 3), it is judged at step 50 before the processing at step 100 whether it is at the restart of the engine 10. For example, when requirements of (a) the temperature of the engine 10 at the time of the startup of the engine 10, or a physical quantity representing the temperature (equivalent value (cooling water temperature, oil temperature, etc.)) is no less than the predetermined value, (b) elapsed time from the last stop of the engine 10 to this engine starts is under the predetermined value, and the like are satisfied, it is possible to judge that it is at the restart.

When the determination requirement at step 50 is satisfied (when it is at the restart), the processing at step 100 and subsequent steps is performed, and when not satisfied (at the time of non-restart), the catalyst regeneration control routine is ended (returned). Also, the processing at step 50 may be performed between steps 100 and 110 or between steps 110 and 120. In this way, by performing the catalyst regeneration control only when the possibility that the catalyst temperature becomes higher than the upper limit temperature is high (at the time of the restart), it is possible to efficiently cancel the malfunction that the exhaust purifying catalyst does not exhibit the exhaust gas purification function while suppressing unnecessary catalyst regeneration control.

A parameter other than the total intake air amount may be used as the amount of heat removed or a physical quantity (equivalent value) representing the amount of heat removed, and the parameter may be reflected in the determination requirements at the time of determining whether the catalyst regeneration control is performed.

The predetermined value A for judgment may be calculated on the basis of a predetermined operation expression instead of the map.

The present invention is widely applicable to an apparatus so long as the apparatus is an exhaust purifying apparatus which is made to perform the combustion and removal of particulate matter deposited on an exhaust purifying catalyst when all the regeneration requirements including at least a requirement on the catalyst temperature of an exhaust purifying catalyst is satisfied.

## Claims

1. An exhaust purifying apparatus (11), comprising:
an exhaust purifying catalyst (32,33,34) that purifies exhaust gas exhausted from an engine (10); and
regeneration control means (41) that performs regeneration control, in which the regeneration control means (41) regenerates the catalyst (32,33,34) by combusting and removing particulate matter deposited on the catalyst (32,33,34), the apparatus being **characterized in that:**
when catalyst regeneration requirements are all satisfied, the control means (41) performs the regeneration control, wherein the requirements include at least a requirement related to a temperature of the catalyst (32,33,34) and a requirement related to an amount of heat removed by air that passes through the catalyst (32,33,34) and **in that** the control means (41) performs the regeneration control, when all the regeneration requirements are satisfied, at the time of restart of the engine.

2. The apparatus according to claim 1,
**characterized in that** the requirement related to the amount of heat removed is that the amount of heat removed by air that passes through the catalyst (32,33,34) or a physical quantity that represents the amount of heat removed is greater than a predetermined value.

3. The apparatus according to claim 2, **characterized in that** the physical quantity is a total amount of air drawn into the engine (10) after start up of the engine (10).

4. The apparatus according to claim 2 or 3,
**characterized in that** the catalyst (32,33,34) has an exhaust gas purification capability in a predetermined temperature zone,
wherein the predetermined value is set such that the temperature of the catalyst (32,33,34) is prevented from exceeding an upper limit of the temperature zone after the control means (41) has performed the regeneration control.

5. The apparatus according to any one of claims 1 to 4, **characterized in that** the engine includes an exhaust passage (14), and a fuel adding valve (31) and the catalyst (32,33,34) are located in the exhaust passage (14);
wherein, when all the regeneration requirements are satisfied, the control means (41) causes the fuel adding valve (31) to add fuel to a section in the exhaust passage (14) that is upstream of the catalyst (32,33,34).

6. A method for purifying exhaust, comprising:
purifying exhaust gas exhausted from an engine (10) with an exhaust purifying catalyst (32,33,34); and
performing control for regenerating the catalyst (32,33,34) by combusting and removing particulate matter deposited on the catalyst (32,33,34), the method being **characterized by:**
judging whether regeneration requirements are all satisfied, which requirements include at least a requirement related to a temperature of the catalyst (32,33,34) and a requirement related to an amount of heat removed by air that passes through the catalyst (32,33,34); and
performing the regeneration control when all the regeneration requirements are satisfied, at the time of restart of the engine (10).

7. The method according to claim 6, **characterized in that** the requirement related to the amount of heat removed is that a total amount of air drawn into the engine (10) after start up of the engine (10) is greater than a predetermined value.

8. The method according to claim 7, **characterized in that** the catalyst (32,33,34) has an exhaust gas purification capability in a predetermined temperature zone,
wherein the predetermined value is set such that the temperature of the catalyst (32,33,34) is prevented from exceeding an upper limit of the temperature zone after the regeneration control has been performed.

## Patentansprüche

1. Vorrichtung zum Reinigen von Abgas (11), umfassend:
einen Katalysator zum Reinigen von Abgas (32, 33, 34), der Abgas reinigt, das aus einem Motor (10) freigesetzt wird; und
ein Regenerationssteuerungsmittel (41), das die Regenerationssteuerung durchführt, indem das Regenerationssteuerungsmittel (41) den Katalysator (32, 33, 34) durch Verbrennen und Entfernen von auf dem Katalysator (32, 33, 34) abgelagerten Feststoffen regeneriert, wobei die Vorrichtung dadurch charakterisiert ist, dass
das Regenerationssteuerungsmittel (41), wenn alle Anforderungen des Katalysators zur Regeneration erfüllt sind, die Regenerationssteuerung durchführt, wobei die Anforderungen wenigstens eine Anforderung bezüglich der Temperatur des Katalysators (32, 33, 34) und eine Anforderung bezüglich der Wärmemenge, die durch die durch den Katalysator (32, 33, 34) strömende Luft abgeführt wird, einschließt, und dadurch dass,
das Steuerungsmittel (41) die Regenerationssteuerung durchführt, wenn alle Anforderungen zur Regeneration zum Zeitpunkt des Neustarts des Motors erfüllt sind.

2. Vorrichtung nach Anspruch 1, **dadurch gekennzeichnet, dass** die Anforderung bezüglich der abgeführten Wärmemenge darin besteht, dass die Wärmemenge, die durch die durch den Katalysator (32, 33, 34) strömende Luft abgeführt wird oder eine physikalischen Menge, die die abgeführte Wärmemenge wiedergibt, größer als ein vorbestimmter Wert ist.

3. Vorrichtung nach Anspruch 2, **dadurch gekennzeichnet, dass** die physikalische Menge eine Gesamtmenge von nach Start des Motors (10) in den Motor (10) eingezogener Luft ist.

4. Vorrichtung nach Anspruch 2 oder 3, **dadurch gekennzeichnet, dass** der Katalysator (32, 33, 34) ein Abgasreinigungsvermögen in einem vorbestimmten Temperaturbereich aufweist, wobei der vorbestimmte Wert so festgelegt wird, dass dem vorgebeugt wird, dass die Temperatur des Katalysators (32, 33, 34) eine obere Grenze des Temperaturbereichs übersteigt, nachdem das Steuerungsmittel (41) die Regenerationssteuerung durchgeführt hat.

5. Vorrichtung nach einem der Ansprüche 1 bis 4, **dadurch gekennzeichnet, dass** der Motor eine Abgasleitung (14) einschließt, und ein Kraftstoffzugabeventil (31) und der Katalysator (32, 33, 34) in einem Abschnitt der Abgasleitung (14) angeordnet sind, wobei das Steuerungsmittel (41), wenn alle Anforderungen zur Regeneration erfüllt sind bewirkt, dass das Kraftstoffzugabeventil (31) Kraftstoff in einen Bereich in der Abgasleitung (14) zugibt, der stromaufwärts des Katalysators (32, 33, 34) liegt.

6. Verfahren zum Reinigen von Abgas, umfassend:
Reinigen von Abgas, das aus einem Motor (10) mit einem Katalysator (32, 33, 34) zum Reinigen von Abgasen freigesetzt wird; und
Durchführen der Steuerung zum Regenerieren des Katalysators (32, 33, 34) durch Verbrennen und Entfernen von auf dem Katalysator (32, 33, 34) abgelagerten Feststoffen, wobei das Verfahren durch folgendes charakterisiert ist:
Beurteilen, ob alle Anforderungen zur Regeneration erfüllt sind, welche wenigstens eine Anforderung bezüglich der Temperatur des Katalysators (32, 33, 34) und eine Anforderung bezüglich der Wärmemenge, die durch die durch den Katalysator (32, 33, 34) strömende Luft abgeführt wird, einschließt, und
Durchführen der Regenerationssteuerung, wenn alle Anforderungen zur Regeneration zum Zeitpunkt des Neustarts des Motors (10) erfüllt sind.

7. Verfahren nach Anspruch 6, **dadurch gekennzeichnet, dass** die Anforderung bezüglich der abgeführten Wärmemenge darin besteht, dass die Gesamtmenge an nach Start des Motors (10) in den Motor (10) eingezogener Luft größer als ein vorbestimmter Wert ist.

8. Verfahren nach Anspruch 7, **dadurch gekennzeichnet, dass** der Katalysator (32, 33, 34) ein Abgasreinigungsvermögen in einem vorbestimmten Temperaturbereich aufweist, wobei der vorbestimmte Wert so festgelegt wird, dass dem vorgebeugt wird, dass die Temperatur des Katalysators (32, 33, 34) eine obere Grenze des Temperaturbereichs übersteigt, nachdem die Regenerationssteuerung durchgeführt wurde.

## Revendications

1. Dispositif de purification d'échappement (11) comprenant :
un catalyseur de purification d'échappement (32, 33, 34) qui purifie un gaz d'échappement évacué à partir d'un moteur (10); et
un moyen de commande de régénération (41) qui exécute une commande de régénération, où le moyen de commande de régénération (41) régénère le catalyseur (32, 33, 34) en brûlant et en enlevant une matière particulaire déposée sur le catalyseur (32, 33, 34), le dispositif étant **caractérisé en ce que**:
lorsque des exigences de régénération de catalyseur sont toutes satisfaites, le moyen de commande (41) exécute la commande de régénération, où les exigences incluent au moins une exigence se rapportant à une température du catalyseur (32, 33, 34) et une exigence se rapportant à une quantité de chaleur enlevée par de l'air qui passe à travers le catalyseur (32, 33, 34) et **en**
**ce que** le moyen de commande (41) exécute la commande de régénération lorsque toutes les exigences de régénération sont satisfaites au moment d'un redémarrage du moteur.

2. Dispositif selon la revendication 1, **caractérisé en ce que** l'exigence se rapportant à la quantité de chaleur enlevée est que la quantité de chaleur enlevée par de l'air qui passe à travers le catalyseur (32, 33, 34) ou une quantité physique qui représente la quantité de chaleur enlevée soit plus grande qu'une valeur prédéterminée.

3. Dispositif selon la revendication 2, **caractérisé en ce que** la quantité physique est une quantité totale d'air attiré dans le moteur (10) après un démarrage du moteur (10).

4. Dispositif selon la revendication 2 ou 3, **caractérisé en ce que** le catalyseur (32, 33, 34) a une capacité de purification de gaz d'échappement dans une zone de température prédéterminée, où la valeur prédéterminée est établie de telle sorte que la température du catalyseur (32, 33, 34) soit empêchée de dépasser une limité supérieure de la zone de température après que le moyen de commande (41) a exécuté la commande de régénération.

5. Dispositif selon l'une quelconque des revendications 1 à 4, **caractérisé en ce que** le moteur inclut un passage d'échappement (14), et une soupape d'ajout de carburant (31) et le catalyseur (32, 33, 34) sont situés dans le passage d'échappement (14);
où, lorsque toutes les exigences de régénération sont satisfaites, le moyen de commande (41) amène la soupape d'ajout de carburant (31) à ajouter du carburant à une section dans le passage d'échappement (14) qui est en amont du catalyseur (32, 33, 34).

6. Procédé pour purifier un échappement, comprenant:
purifier un gaz d'échappement évacué à partir d'un moteur (10) avec un catalyseur de purification d'échappement (32, 33, 34); et
exécuter une commande pour régénérer le catalyseur (32, 33, 34) en brûlant et en enlevant une matière particulaire déposée sur le catalyseur (32, 33, 34), le procédé étant **caractérisé par** :
juger si des exigences de régénération sont toutes satisfaites, lesquelles exigences incluent au moins une exigence se rapportant à une température du catalyseur (32, 33, 34) et une exigence se rapportant à une quantité de chaleur enlevée par de l'air qui passe à travers le catalyseur (32, 33, 34); et
exécuter la commande régénération, lorsque toutes les exigences de régénération sont satisfaites et au moment d'un redémarrage du moteur (10).

7. Procédé selon la revendication 6, **caractérisé en ce que** l'exigence se rapportant à la quantité de chaleur enlevée est qu'une quantité totale d'air attiré dans le moteur (10) après un démarrage du moteur (10) soit plus grande qu'une valeur prédéterminée.

8. Procédé selon la revendication 7, **caractérisé en ce que** le catalyseur (32, 33, 34) a une capacité de purification de gaz d'échappement dans une zone de température prédéterminée,
où la valeur prédéterminée est établie de telle sorte que la température du catalyseur (32, 33, 34) soit empêchée de dépasser une limité supérieure de la zone de température après que la commande de régénération a été exécutée.
